# EUROPEAN PATENT SPECIFICATION

(11) **EP 2 669 081 B1**
(45) Date of publication and mention of the grant of the patent: **29.05.2019**
(21) Application number: 12739123.3
(22) Date of filing: 26.01.2012
(51) Int. Cl.: B32B 5/02, B32B 5/28, B29C 65/06, B32B 5/12, B32B 27/20, B32B 27/12, B29L 31/30, B29C 65/48, B29C 65/56

(54) **JOINT BODY OF CARBON FIBER REINFORCED COMPOSITE MATERIAL**
ZUSAMMENGESETZTER KÖRPER AUS EINEM KOHLENSTOFFFASERVERSTÄRKTEN VERBUNDMATERIAL
CORPS ASSEMBLÉ FAIT D'UNE MATIÈRE COMPOSITE RENFORCÉE DE FIBRE DE CARBONE

(30) Priority: 28.01.2011 JP 2011016507
(43) Date of publication of application: 04.12.2013
(73) Proprietor: Teijin Limited, Osaka-shi, Osaka 541-0054 (JP)
(72) Inventor: TESHIMA, Masatomo, Ehime 791-8044 (JP); YAMAJI, Tadashi, Ehime 791-8044 (JP); SUZUKI, Koji, Ehime 791-8044 (JP); YAGI, Yutaka, Ehime 791-8044 (JP)
(74) Representative: Cockerton, Bruce Roger
(86) International application number: PCT/JP2012/051584
(87) International publication number: WO 2012/102315

(56) References cited:
- WO-A1-2006/028107
- WO-A1-2009/142291
- JP-A- 10 080 982
- JP-A- 2007 110 138
- JP-A- 2009 523 083
- JP-A- 2010 254 276
- US-A- 4 770 929
- US-A- 5 418 035
- US-A1- 2008 257 671

## Description

### Technical Field

The present invention relates to a joint body of a carbon fiber-reinforced composite material produced by vibration welding of a reinforcing member having a layer structure containing a carbon fiber and a thermoplastic resin with a reinforced member containing a carbon fiber and a thermoplastic resin.

### Background Art

Recently, a so-called fiber-reinforced composite material containing a matrix resin and a reinforcing fiber such as a carbon fiber has been focused in the machine field. The jointing of such fiber-reinforced composite materials required for the production of components and structures is commonly performed by using a method that provides a closed cross section for improved rigidity. Fiber-reinforced composite materials which contain thermoplastic resin as the matrix are jointed by mechanical means with the use of a bolt and a nut, a rivet, or the like, or by using adhesives. However, a mechanical joint with a bolt, a nut or the like commonly leads to increase in weight. In addition, stress is concentrated at a joint position in the composite materials, and in the worst case a chain of destruction from a first point of stress concentration may be occurred. An adhesive joint generally requires an adhesive layer of a certain thickness to provide strength, and significant amounts of adhesive for the joining of large members in particular. This raises the concern that a significant weight increase is caused in the resulting member. Another drawback is that the adhesive alone can hardly provide sufficient strength. Further, use of an adhesive generally takes a long time before the practical strength can be achieved, and requires a curing step (a static step to allow the adhesive to develop its adhesive effect and stabilize).

In one approach for improving the strength of the joint body itself, a foaming agent and a reinforcing sheet are closely provided inside a closed cross section, as described in Patent Document 1. A problem, however, is that the additional member inside the closed cross section is disadvantageous for mass production. The reinforcing sheet specifically described in Patent Document 1 is a fiber-reinforced composite material composed of a carbon fiber and a thermosetting resin, and no sufficient technique has been established for the jointing of the fiber-reinforced composite materials composed of a carbon fiber and a thermoplastic resin.
Patent Document 2 describes a laminated body for an automobile exterior which includes a carbon fiber-reinforced layer containing carbon fibers and a thermoplastic resin layer.
Patent Document 3 describes a component for the absorption of energy on an impact having a frame as well as having a section located in the frame and connected to the frame, with the section consisting of a multilayer fiber composite or comprising a multilayer fiber composite. Patent Document 4 describes a light-weight composite material having a laminated structure comprising at least one porous fiber layer constructed of reinforcing short fibers which are distributed in random directions and combined with each other mainly at intersections thereof by carbonized binder and at least one fiber reinforced plastic layer comprising reinforcing fibers and a matrix resin.

### Related Art Document

### Patent Document

Patent Document 1: JP-A-2000-38157
Patent Document 2: JP-A-2010-254276
Patent Document 3: US-A-2008-0257671
Patent Document 4: US 4,770,929

### Summary of the Invention

### Problems that the Invention is to Solve

It is an object of the present invention to provide a joint body of carbon fiber-reinforced composite materials that contain a thermoplastic resin as the matrix, having excellent strength, rigidity, lightness, and ease of mass production.

### Means for Solving the Problems

The present inventors conducted intensive studies to solve the foregoing problems, and found that a joint body of a specific configuration, which is formed by vibration-welding a reinforcing member with a specific layer structure containing a carbon fiber and a thermoplastic resin with a reinforced member containing a carbon fiber and a thermoplastic resin, shows extremely excellent property, and thereby the present invention has been completed. The invention is as defined in the claims.

The joint body of the present invention including a reinforcing member having a random layer and a unidirectional material layer shows strength and rigidity comparable to those of a joint body including a reinforcing member having only the random layer, while being lighter weight. Further, the joint body of the present invention is extremely excellent in rigidity and strength in directions other than a fiber direction as compared to a joint body including a reinforcing member having only the unidirectional material layer. In addition, because the joint body of the present invention is jointed by vibration welding to a reinforced member, the joint body is more advantageous in terms of mass production and joint strength compared to those jointed by using common adhesives.

### Brief Description of the Drawings

Fig. 1 is a schematic view showing exemplary structures of the joint body of the present invention.
Fig. 2 is a schematic view showing exemplary structures of a reinforcing member included in the joint body of the present invention.
Fig. 3 is a schematic view showing exemplary structures of a reinforcing member included in the joint body of the present invention.

### Mode for Carrying Out the Invention

The present invention is a joint body produced by the vibration welding of:
a reinforcing member having at least one random layer in which chopped carbon fibers are randomly oriented in a thermoplastic resin, and at least one unidirectional material layer in which continuous carbon fibers are unidirectionally arranged in a thermoplastic resin (the same or different from the thermoplastic resin contained in the random layer); and
a reinforced member with an open sectional shape, the reinforced member having at least one selected from the group consisting of a random layer (a chopped carbon fiber and a thermoplastic resin may be the same or different from those contained in the random layer of the reinforcing member) and the unidirectional material layer (the a continuous carbon fiber and a thermoplastic resin may be the same or different from those contained in the unidirectional material layer of the reinforcing member), wherein
the reinforcing member and the reinforced member are vibration-welded to form a hollow closed section.

Simply, the present invention is a joint body of carbon fiber-reinforced composite materials.

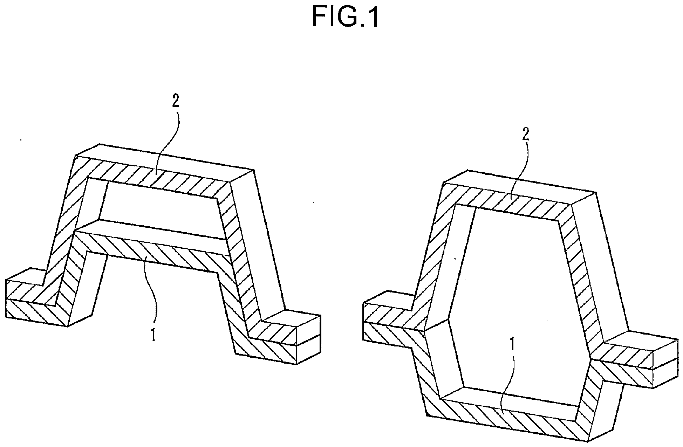

An embodiment of the joint body of the present invention is described below. Fig. 1 represents examples of the joint body of the present invention. It should be noted that the present invention is not limited to these.

Each element of the present invention is described below.

### [Reinforcing member]

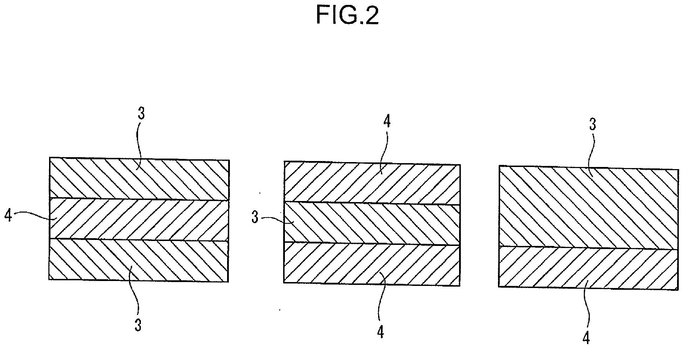

The reinforcing member contained in the joint body of the present invention has at least one random layer in which chopped carbon fibers are randomly oriented in a thermoplastic resin, and at least one unidirectional material layer in which continuous carbon fibers are unidirectionally arranged in a thermoplastic resin (may be the same or different thermoplastic resin from that contained in the random layer). Specific examples are represented in Fig. 2.

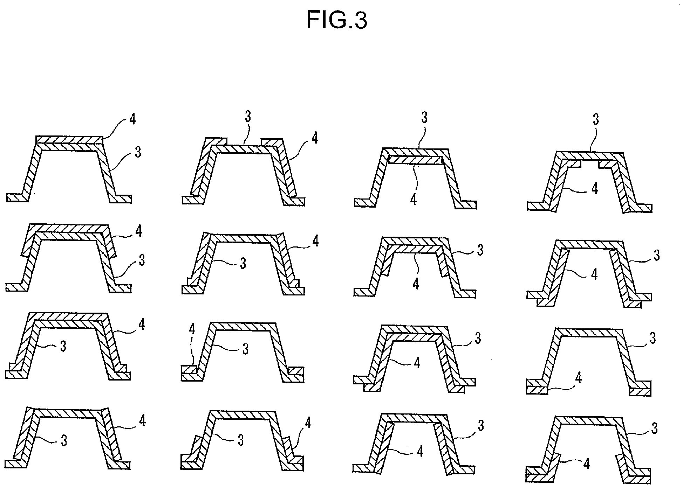

When the reinforcing member contained in the joint body of the present invention has a hat shape, as a preferable layer structure, an embodiment in which the whole or a part of the inner side, the whole or a part of the outer side, the whole of the outer and inner sides, a part of the outer and inner sides, or a part of the outer side or inner side and the whole of the other side is layered on another layer is exemplified. Here, "another layer" may be layered while being divided into a plurality of portions. As specific examples, Fig. 3 shows exemplary structures of a hat-shaped reinforcing member having a layer structure including at least one random layer and at least one unidirectional material layer. Needless to say, in the layer structure shown in Fig. 3, a reinforcing member having a structure in which the random layer and the unidirectional material layer are exchanged also may preferably be used for the joint body of the present invention.

Preferred as the reinforcing member is a reinforcing member with a layer structure is preferable which has the random layer as a core material and the unidirectional material layer as a skin layer, or a reinforcing member with a layer structure having the unidirectional material layer as a core material and the random layer as a skin layer.

Further, preferred as the reinforcing member is a reinforcing member with a three-dimensional shape having the random layer and the unidirectional material layer formed by pressing, in a mold, a random carbon fiber-reinforced composite material in which chopped carbon fibers are randomly oriented in thermoplastic resin and a continuous carbon fiber-reinforced composite material in which continuous carbon fibers are unidirectionally arranged in thermoplastic resin (may be the same or different thermoplastic resin from that contained in the random carbon fiber-reinforced composite material), respectively.

Further, preferred as the reinforcing member is a reinforcing member that contains the unidirectional material layer in an amount of 5 to 100 Vol% to the total volume of the random layer, in other words, 5 to 100 parts by volume of the unidirectional material layer with respect to 100 parts by volume taken as the total volume of the random layer.

### [Reinforced member]

The reinforced member contained in the joint body of the present invention is a member with an open cross-sectional shape having at least one selected from the group consisting of a random layer (a chopped carbon fiber and a thermoplastic resin may be the same or different from those contained in the random layer of the reinforcing member), and a unidirectional material layer (a continuous carbon fiber and a thermoplastic resin may be the same or different from those contained in the unidirectional material layer of the reinforcing member). As used herein, "open cross-sectional shape" refers to a shape whose section is not closed, such as the shape of the cross section of a box. Specific examples are represented in Fig. 1.

### [Random Layer]

The random layer included in the reinforcing member and the reinforced member of the joint body in the present invention is a layer in which chopped carbon fibers are randomly oriented in thermoplastic resin. Preferably, the random layer contains chopped carbon fibers having a fiber length of 10 to 100 mm. It is also preferable that the chopped carbon fibers are randomly oriented in a substantially two-dimensional fashion in the layer with a fiber areal weight of 25 to 3,000 g/m². As used herein, the chopped carbon fibers being randomly oriented in a substantially two-dimensional fashion means that the chopped carbon fibers has the main oriented direction of the fiber axis in a contact surface of the random layer, and that the ratio obtained by dividing the larger tensile modulus by the smaller one as measured along the two orthogonal directions within the plane does not exceed two.

Preferably, the random layer includes a bundle of at least specific numbers of chopped carbon fibers by controlling degree of opening, and other open chopped carbon fibers in specific proportions.

In the random layer, it is preferable that the thermoplastic resin exists in 50 to 1,000 parts by weight, more preferably 50 to 400 parts by weight, further preferably 50 to 100 parts by weight with respect to 100 parts by weight of the chopped carbon fibers. The number of dry chopped carbon fibers may increase when the thermoplastic resin is less than 50 parts by weight with respect to the 100 parts by weight of the chopped carbon fibers. When exceeding 1,000 parts by weight, the chopped carbon fibers will be deficient, and may form the material unsuitable as a structural material.

Preferably, the random layer is one obtained by molding the random carbon fiber-reinforced composite material in which chopped carbon fibers are randomly oriented in the thermoplastic resin into a layer form.

Further, the random layer may contain a third component (for example, other carbon materials such as fullerene or carbon nanotube, different materials such as thermosetting resin, metal, ceramic, glass, or other various additives) in addition to the chopped carbon fibers and the thermoplastic resin, provided that it does not interfere with the effects of the present invention.

In case that the reinforcing member or the reinforced member of the joint body of the present invention has a plurality of random layers, only one of, a plurality of or all of the layers may satisfy the foregoing preferred forms.

### [Unidirectional Material Layer]

The unidirectional material layer in the reinforcing member and the reinforced member of the joint body of the present invention refers to a layer in which the continuous carbon fibers are unidirectionally arranged in the thermoplastic resin (may be the same or different from that contained in the random layer). In the present invention, "unidirectional material" refers to a continuous carbon fiber.

The unidirectional material used in the present invention may be a stacked body of a plurality of continuous carbon fibers, or a multiaxial woven fabric obtained by penetrating through a stacked body (multiaxial woven fabric substrate) in which sheets made from continuous carbon fiber bundles are stacked at different angles of the sheets and stitched with a stitching yarn such as a nylon yarn, a polyester yarn, and a glass fiber yarn in the thickness direction of the fabric while reciprocating between the front side and the back side of the stacked body along the surface direction.

The average fiber diameter of the continuous carbon fibers constituting the unidirectional material layer is preferably 3 to 12 µm, more preferably 5 to 7 µm.

In the unidirectional material layer included in the reinforcing member or the reinforced member in the joint body of the present invention, it is preferable that the thermoplastic resin is present in 30 to 200 parts by weight, more preferably 40 to 100 parts by weight with respect 100 parts by weight of the carbon fiber.

Further, the unidirectional material layer is preferably a molded layer product of continuous carbon fiber-reinforced composite material in which continuous carbon fibers are unidirectionally arranged in the thermoplastic resin by, for example, impregnating or partially-impregnating the thermoplastic resin in a unidirectional material containing unidirectionally arranged continuous carbon fibers.

Further, the unidirectional material layer may contain a third component (for example, other carbon materials such as fullerene and carbon nanotube, different materials such as thermosetting resin, metal, ceramic, glass, or other various additives) in addition to the continuous carbon fibers and the thermoplastic resin, provided that it does not interfere with the effects of the present invention.

When the reinforcing member or the reinforced member of the joint body of the present invention has a plurality of unidirectional material layers, only one of a plurality of or all of the layers may satisfy the foregoing preferred forms.

### [Thermoplastic Resin]

The random layer or unidirectional material layer of the reinforcing member and the reinforced member of the joint body of the present invention contains thermoplastic resin as the matrix (resin). Preferred as the thermoplastic resin is at least one selected from the group consisting of polyamide, polycarbonate, polyoxymethylene, polyphenylene sulfide, polyphenylene ether, modified polyphenylene ether, polyethylene terephthalate, polybutylene terephthalate, polyethylene naphthalate, polyethylene, polypropylene, polystyrene, polymethylmethacrylate, AS resin, ABS resin, and the like, and a resin composition of two or more of these. Particularly preferred from considerations of cost and properties is at least one selected from the group consisting of polyamide, polypropylene, polycarbonate, polyphenylene sulfide, and a resin composition of two or more kinds of these resins.

In the joint body of the present invention, the thermoplastic resins contained in the random layer and the unidirectional material layer of the reinforcing member and the reinforced member may be the same or different.

In the present invention, known kneading, impregnating, and molding techniques can be utilized for the mixing of the thermoplastic resin with the chopped carbon fibers or continuous carbon fibers to form the random layer and the unidirectional material layer.

### [Chopped Carbon Fiber]

In the present invention, the chopped carbon fibers contained in the random layer are short lengths of cut carbon fibers, and known products including carbon fibers bundled by using a sizing agent may be used and various different types and brands may also be used. The preferred chopped carbon fibers for use in the present invention are as described above in relation to the random layer.

Further, in the present invention, when the reinforced member has the random layer, the chopped carbon fibers contained in the random layer may be the same or different chopped carbon fibers contained in the random layer of the reinforcing member.

### [Continuous Carbon Fiber]

In the present invention, the continuous carbon fiber contained in the unidirectional material layer refers to a carbon fiber in long fiber which is not subjected to process such as chopping, milling, and pulverization that produce short fibers and is in non-whisker.

In the present invention, known products of various different types and brands can be used as the continuous carbon fibers. The preferred continuous carbon fibers for use in the present invention are as described above in relation to the random layer.

Further, in the present invention, when the reinforced member has the unidirectional material layer, the continuous carbon fibers contained in the unidirectional material layer may be the same or different kind of continuous carbon fibers contained in the unidirectional material layer of the reinforcing member.

### [Vibration Welding]

The vibration welding used to obtain the joint body of the present invention is a method that joins two members by melting the resin under the frictional heat generated between the two members by periodic vibrations in a state where the two members are in contact with each other under pressure. The method can be performed by using a known vibration welding machine.

### Industrial Applicability

The joint body of the present invention has a wide range of applications, including aerospace, transport machinery, electric and electronic devices, machine tools, industrial, general, and precision machinery. The joint body of the present invention is particularly preferred for use in automobile parts, and vehicle structures.

### Description of Reference Numerals and Signs

- 1: Reinforcing member
- 2: Reinforced member
- 3: Random layer
- 4: Unidirectional material layer

## Claims

1. A joint body comprising:
a reinforcing member (1) having at least one random layer (3), and at least one unidirectional material layer (4); and
a reinforced member (2) with an open sectional shape having at least one selected from the group consisting of a random layer (3) and a unidirectional material layer (4),
wherein the reinforcing member (1) has a three-dimensional shape, the reinforcing member (1) having the random layer (3) and the unidirectional material layer (4) formed by pressing, in a mold, a random carbon fiber-reinforced composite material in which the chopped carbon fiber is randomly oriented in the thermoplastic resin, and a continuous carbon fiber-reinforced composite material in which the continuous carbon fiber is unidirectionally arranged in the thermoplastic resin, respectively,
**characterised in that** the random layer (3) includes a bundle of at least specific numbers of chopped carbon fibers and other open chopped carbon fibers, and
further **characterised in that** the reinforcing member (1) and the reinforced member (2) are vibration-welded to form a hollow closed section and in the at least one random layer (3) a chopped carbon fiber is randomly oriented in a thermoplastic resin, and in the at least one unidirectional material layer (4) a continuous carbon fiber is unidirectionally arranged in a thermoplastic resin.

2. The joint body according to claim 1,
wherein the reinforcing member (1) has a layer structure including the random layer (3) as a core material and the unidirectional material layer (4) as a skin layer.

3. The joint body according to claim 1,
wherein the reinforcing member (1) has a layer structure including the unidirectional material layer (4) as a core material and the random layer (3) as a skin layer.

4. The joint body according to any one of claims 1 to 3,
wherein the chopped carbon fiber contained in the random layer (3) has a fiber length of 10 to 100 mm.

5. The joint body according to any one of claims 1 to 4,
wherein the reinforcing member (1) contains the unidirectional material layer (4) in 5 to 100 Vol% with respect to a total volume of the random layer (3).

6. The joint body according to any one of claims 1 to 5,
wherein the reinforcing member (1) contains the thermoplastic resin in the random layer (3) in 50 to 1,000 parts by weight with respect to 100 parts by weight of the chopped carbon fiber.

7. The joint body according to any one of claims 1 to 6,
wherein the reinforcing member (1) contains the thermoplastic resin in the unidirectional material layer (4) in 30 to 200 parts by weight with respect to 100 parts by weight of the continuous carbon fiber.

8. The joint body according to any one of claims 1 to 7,
wherein the unidirectional material layer (4) is an impregnated or partially-impregnated product of the thermoplastic resin in a unidirectional material in which the continuous carbon fiber is unidirectionally arranged.

## Patentansprüche

1. Zusammengesetzter Körper, umfassend:
ein verstärkendes Element (1) mit mindestens einer beliebigen Schicht (3) und mindestens einer unidirektionalen Materialschicht (4); und
ein verstärktes Element (2) mit einer offenen Querschnittsform, aufweisend mindestens eine, die ausgewählt wurde aus der aus einer beliebigen Schicht (3) und einer unidirektionalen Materialschicht (4) bestehenden Gruppe,
wobei das verstärkende Element (1) eine dreidimensionale Form hat, und das verstärkende Element (1), das die beliebige Schicht (3) und die unidirektionale Materialschicht (4) aufweist, durch Pressen eines beliebigen kohlenstofffaserverstärkten Verbundmaterials, in dem die geschnitzelte Kohlenstofffaser in dem thermoplastischen Harz beliebig ausgerichtet ist, bzw. eines kontinuierlichen kohlenstofffaserverstärkten Verbundmaterials, in dem die kontinuierliche Kohlenstofffaser in dem thermoplastischen Harz unidirektional angeordnet ist, in einer Form ausgebildet wurde,
**dadurch gekennzeichnet, dass**
die beliebige Schicht (3) ein Bündel von mindestens spezifischen Zahlen von geschnitzelten Kohlenstofffasern und anderen offenen geschnitzelten Kohlenstofffasern beinhaltet, und
ferner **dadurch gekennzeichnet, dass**
das verstärkende Element (1) und das verstärkte Element (2) vibrationsgeschweißt sind, um einen hohlen geschlossenen Abschnitt auszubilden, und in der mindestens einen beliebigen Schicht (3) eine geschnitzelte Kohlenstofffaser in einem thermoplastischen Harz beliebig ausgerichtet ist, und in der mindestens einen unidirektionalen Materialschicht (4) eine kontinuierliche Kohlenstofffaser in einem thermoplastischen Harz kontinuierlich angeordnet ist.

2. Zusammengesetzter Körper nach Anspruch 1,
wobei das verstärkende Element (1) eine Schichtstruktur aufweist, welche die beliebige Schicht (3) als ein Kernmaterial und die unidirektionale Materialschicht (4) als eine Hautschicht beinhaltet.

3. Zusammengesetzter Körper nach Anspruch 1,
wobei das verstärkende Element (1) eine Schichtstruktur aufweist, welche die unidirektionale Materialschicht (4) als ein Kernmaterial und die beliebige Schicht (3) als eine Hautschicht beinhaltet.

4. Zusammengesetzter Körper nach einem der Ansprüche 1 bis 3,
wobei die in der beliebigen Schicht (3) enthaltene geschnitzelte Kohlenstofffaser eine Faserlänge von 10 bis 100 mm hat.

5. Zusammengesetzter Körper nach einem der Ansprüche 1 bis 4,
wobei das verstärkende Element (1) die unidirektionale Materialschicht (4) in 5 bis 100 Vol.-% in Bezug auf ein Gesamtvolumen der beliebigen Schicht (3) beinhaltet.

6. Zusammengesetzter Körper nach einem der Ansprüche 1 bis 5,
wobei das verstärkende Element (1) das thermoplastische Harz in der beliebigen Schicht (3) in 50 bis 1.000 Gewichtsteilen mit Bezug auf 100 Gewichtsteile der geschnitzelten Kohlenstofffaser enthält.

7. Zusammengesetzter Körper nach einem der Ansprüche 1 bis 6,
wobei das verstärkende Element (1) das thermoplastische Harz in der unidirektionalen Materialschicht (4) in 30 bis 200 Gewichtsteilen mit Bezug auf 100 Gewichtsteile der kontinuierlichen Kohlenstofffaser enthält.

8. Zusammengesetzter Körper nach einem der Ansprüche 1 bis 7,
wobei die unidirektionale Materialschicht (4) ein imprägniertes oder teilweise imprägniertes Produkt des thermoplastischen Harzes in einem unidirektionalen Material ist, in dem die kontinuierliche Kohlenstofffaser unidirektional angeordnet ist.

## Revendications

1. Corps assemblé comprenant :
un élément de renfort (1) ayant au moins une couche aléatoire (3) et au moins une couche de matière unidirectionnelle (4) ; et
un élément renforcé (2) avec une forme de section transversale ouverte ayant une couche aléatoire (3) et/ou une couche de matière unidirectionnelle (4),
l'élément de renfort (1) ayant une forme tridimensionnelle, l'élément de renfort (1) ayant la couche aléatoire (3) et la couche de matière unidirectionnelle (4) formées en pressant, dans un moule, une matière composite renforcée de fibre de carbone aléatoire dans laquelle la fibre de carbone coupée est orientée aléatoirement dans la résine thermoplastique, et une matière composite renforcée de fibre de carbone continue dans laquelle la fibre de carbone continue est disposée unidirectionnellement dans la résine thermoplastique, respectivement, **caractérisé en ce que**
la couche aléatoire (3) comprenant un faisceau d'au moins des nombres spécifiques de fibres de carbone coupées et d'autres fibres de carbone coupées ouvertes, et **caractérisé en outre en ce que**
l'élément de renfort (1) et l'élément renforcé (2) sont soudés par friction vibratoire pour former une section fermée creuse et dans l'au moins une couche aléatoire (3), une fibre de carbone coupée est orientée aléatoirement dans une résine thermoplastique, et dans l'au moins une couche de matière unidirectionnelle (4), une fibre de carbone continue est disposée unidirectionnellement dans une résine thermoplastique.

2. Corps assemblé selon la revendication 1,
l'élément de renfort (1) ayant une structure de couche comprenant la couche aléatoire (3) comme matière centrale et la couche de matière unidirectionnelle (4) comme couche de peau.

3. Corps assemblé selon la revendication 1,
l'élément de renfort (1) ayant une structure de couche comprenant la couche de matière unidirectionnelle (4) comme matière centrale et la couche aléatoire (3) comme couche de peau.

4. Corps assemblé selon l'une quelconque des revendications 1 à 3,
la fibre de carbone coupée contenue dans la couche aléatoire (3) ayant une longueur de fibre comprise entre 10 et 100 mm.

5. Corps assemblé selon l'une quelconque des revendications 1 à 4,
l'élément de renfort (1) contenant la couche de matière unidirectionnelle (4) en 5 à 100 % en volume par rapport à un volume total de la couche aléatoire (3).

6. Corps assemblé selon l'une quelconque des revendications 1 à 5,
l'élément de renfort (1) contenant la résine thermoplastique dans la couche aléatoire (3) en 50 à 1 000 parties en poids par rapport à 100 parties en poids de la fibre de carbone coupée.

7. Corps assemblé selon l'une quelconque des revendications 1 à 6,
l'élément de renfort (1) contenant la résine thermoplastique dans la couche de matière unidirectionnelle (4) en 30 à 200 parties en poids par rapport à 100 parties en poids de la fibre de carbone continue.

8. Corps assemblé selon l'une quelconque des revendications 1 à 7,
la couche de matière unidirectionnelle (4) étant un produit imprégné ou partiellement imprégné de la résine thermoplastique dans une matière unidirectionnelle dans laquelle la fibre de carbone continue est disposée unidirectionnellement.
